# EUROPÄISCHE PATENTSCHRIFT

(11) **EP 3 629 141 B1**
(45) Veröffentlichungstag und Bekanntmachung des Hinweises auf die Patenterteilung: **14.04.2021**
(21) Anmeldenummer: 18197531.9
(22) Anmeldetag: 28.09.2018
(51) Int. Cl.: G06F 3/0484

(54) **VERFAHREN UND VORRICHTUNG ZUM ÜBERPRÜFEN EINES KONFIGURATIONSPARAMETERWERTS**
METHOD AND DEVICE FOR CHECKING A CONFIGURATION PARAMETER VALUE
PROCÉDÉ ET DISPOSITIF DE CONTRÔLE D'UNE VALEUR PARAMÉTRIQUE DE CONFIGURATION

(43) Veröffentlichungstag der Anmeldung: 01.04.2020
(73) Patentinhaber: SICK AG, 79183 Waldkirch (DE)
(72) Erfinder: Pokrandt, Peter, 76474 Au am Rhein (DE)
(74) Vertreter: Manitz Finsterwald Patent- und Rechtsanwaltspartnerschaft mbB

(56) Entgegenhaltungen:
- DE-A1-102008 062 623
- US-A- 5 742 280
- US-A1- 2002 198 611
- US-A1- 2004 223 002
- US-A1- 2006 074 514
- US-A1- 2007 179 644

## Beschreibung

Die vorliegende Erfindung betrifft ein Verfahren zum Überprüfen eines an einer elektronisch konfigurierbaren Vorrichtung eingestellten Konfigurationsparameterwerts. Die Vorrichtung weist eine Benutzerschnittstelle mit einer Anzeigeeinrichtung auf, durch die ein Bediener die Vorrichtung konfigurieren kann. Insbesondere kann der Bediener die Vorrichtung konfigurieren, indem ein jeweiliger Konfigurationsparameter auf einen gewünschten Wert eingestellt wird. Der eingestellte Wert kann dann für die Steuerung der Vorrichtung herangezogen werden, z.B. indem eine Steuereinheit der Vorrichtung vordefinierte oder dynamische Steuerungsprogramme in Abhängigkeit einer oder mehrerer eingestellter Konfigurationsparameterwerte ausführt.

Die Benutzerschnittstelle der Vorrichtung ist allgemein dazu ausgebildet, einen eingestellten Konfigurationsparameterwert unter Verwendung eines Computerprogramms, insbesondere eines Browsers, zum Darstellen von Daten an der Anzeigeeinrichtung anzuzeigen.

Computerprogramme zum Darstellen von Daten sind bekannt und finden in praktisch jedem handelsüblichen PC Verwendung, wenn der Benutzer des PCs auf dem Monitor Inhalte einer Website angezeigt bekommen möchte. Hierbei ermöglicht das Computerprogramm ein benutzerfreundliches Navigieren durch einen "Internetauftritt", der mehrere Seiten umfasst. Solche Computerprogramme sind auch als sogenannte Webbrowser oder Browser bekannt, z.B. Internet Explorer, Firefox, Chrome, Safari und dergleichen.

Computerprogramme zum Darstellen von Daten können vorteilhaft auch zum Einstellen der Konfigurationsparameter über die Benutzerschnittstelle verwendet werden. Es können insbesondere auch bekannte Browser Verwendung finden, wobei es aber auch möglich ist, speziell angepasste Browserprogramme vorzusehen, welche von bekannten Browsern ("Standardbrowsern" wie z.B. Internet Explorer) abweichen können.

An die zu konfigurierende Vorrichtung sind oftmals erhöhte Sicherheitsanforderungen zu stellen. Beispielsweise kann die Vorrichtung eine industrielle Maschine oder ein Teil hiervon sein, von der potentielle Gefahren für Personen ausgehen. Es versteht sich, dass an die Steuerung einer solchen Vorrichtung, insbesondere im Hinblick auf eine zuverlässige Konfigurierung, im Vergleich zu einfachen PCs deutlich erhöhte Sicherheitsanforderungen gestellt werden müssen, um einen sicheren Betrieb der Vorrichtung zu gewährleisten. Allgemein kann die Vorrichtung dann auch als Sicherheitsvorrichtung bezeichnet werden.

Vor dem Hintergrund der erhöhten Sicherheitsanforderungen soll vorzugsweise zu jeder Zeit gewährleistet sein, dass ein eingestellter Konfigurationsparameterwert einem gewünschten Konfigurationsparameterwert entspricht. Hierzu muss also überprüft werden, dass der eingestellte Konfigurationsparameterwert mit dem gewünschten Wert übereinstimmt. Zu diesem Zweck können die Steuerung und die Benutzerschnittstelle so ausgebildet sein, dass ein eingestellter Wert von einem Bediener bestätigt werden muss bevor der eingestellte Wert für eine Steuerung der Vorrichtung zugrunde gelegt wird. Mit anderen Worten wird die effektive Konfigurierung der Vorrichtung in Abhängigkeit des eingestellten Werts erst dann ausgelöst, wenn der eingestellte Wert zuvor bedienerseitig überprüft bzw. bestätigt worden ist.

Im Hinblick auf die Benutzerschnittstelle können allerdings Fehler in Form einer Falschanzeige des eingestellten Konfigurationsparameterwerts auftreten. Solche Fehler sollen vermieden werden, weil sich derartige Fehler gravierend auf die Sicherheit der Vorrichtung und etwaiger hiervon abhängiger Systeme auswirken können.

Als Beispiel sei eine Sensorvorrichtung genannt, durch die ein vordefinierter Bereich überwacht werden soll. Ein eingestellter Konfigurationsparameterwert kann dann insbesondere durch eine Abschaltdistanz gebildet sein, d.h. eine vordefinierte Distanz bis zu der sich ein Objekt der Sensorvorrichtung nähern darf bevor ein Abschaltsignal (z.B. zum Abschalten einer gefährlichen Maschine) erzeugt wird. Bei einem Darstellungs- bzw. Anzeigefehler des von einem Bediener eingegebenen Abschaltdistanzwerts kann es vorkommen, dass der Bediener einen Wert bestätigt, der sich von dem tatsächlich eingestellten Wert in der Vorrichtung unterscheidet (z.B. kann eine Abschaltdistanz von 1m angezeigt werden obwohl an der Vorrichtung eine Abschaltdistanz von 2m eingestellt ist). Eine solche Diskrepanz soll wegen der sicherheitskritischen Funktion der Abschaltdistanz vermieden werden.

Zur Vermeidung von Fehlern in Bezug auf eingestellte Konfigurationsparameterwerte ist die Sicherung mit Prüfsummen bekannt, sodass Übertragungs- und Speicherfehler erkannt werden können. Ferner können zur Vermeidung von Darstellungs- bzw. Anzeigefehlern speziell angepasste Anzeigeprogramme verwendet werden, die z.B. als Bestandteil einer Betriebssoftware der Vorrichtung zusammen mit der Vorrichtung bereitgestellt werden. Aus Sicherheitsgründen werden die Betriebssoftware und hierin enthaltene Anzeigeprogramme als ausführbare Software ausgeliefert (kompilierter Quellcode), sodass nachträgliche Modifikationen praktisch ausgeschlossen sind. Hierbei kann in den meisten Fällen mit ausreichender Wahrscheinlichkeit davon ausgegangen werden, dass ein eingestellter Konfigurationsparameterwert korrekt angezeigt wird.

Nun werden allerdings zunehmend Cloud-orientierte Verfahren eingesetzt, die die Darstellungssoftware nicht mehr integriert haben. Diese Entwicklung beruht auf dem Umstand, dass moderne Vorrichtungen nicht mehr unbedingt als in sich abgeschlossene Systeme betrachtet und dementsprechend betrieben werden. Vielmehr werden im Zuge der Digitalisierung zunehmend vernetzte Systeme angestrebt, die durch eine Interaktion von unterschiedlichsten Komponenten geprägt sind. Hierbei soll oftmals auch Standardhardware und -software zum Einsatz kommen und es kann nicht ohne Weiteres davon ausgegangen werden, dass die betreffenden Komponenten auch fehlerfrei sind und erhöhten Sicherheitsanforderungen genügen. Beispielsweise soll es ermöglicht werden, eine Vorrichtung auch über einen gewöhnlichen PC oder einen zentralen Server zu konfigurieren (z.B. "Webkonfigurierung"). Hierbei sollen vorzugsweise Standardwebbrowser eingesetzt werden, die praktisch immer installiert sind oder hierfür zumindest leicht aus dem Internet heruntergeladen werden können. Die Konfigurierung kann somit sehr benutzerfreundlich gestaltet werden, da die Einstellung der Konfigurationsparameter auch aus der Ferne und von unterschiedlichen Orten aus vorgenommen werden kann. Beispielsweise kann zur Steuerung ein Tablet-PC eingesetzt werden, der mit einem Betriebsrechner der Vorrichtung verbunden ist. Eingestellte Konfigurationsparameterwerte können dann über einen Standardbrowser des Tablet-PCs angezeigt werden, wobei der Bediener die angezeigten Werte bestätigen kann, um die Vorrichtung zu konfigurieren. Durch den Einsatz von Standardbrowsern können Anzeigefehler jedoch nicht ausgeschlossen werden.

US 2004/0223002 A1 offenbart eine Vorrichtung mit einem Display, wobei in einem ersten Anzeigefenster eingegebene algebraische Ausdrücke angezeigt werden, und wobei in einem zweiten Anzeigefenster der zugehörige Graph angezeigt wird. Weiterer verwandter Stand der Technik ist in den Dokumenten US 2006/0074514 A1, US 2007/0179644 A1, DE 10 2008 062 623 A1 und US 5 742 280 A beschrieben.

Es ist eine Aufgabe der Erfindung ein verbessertes Verfahren zum sicheren Überprüfen eines eingestellten Konfigurationsparameterwerts anzugeben.

Die Aufgabe wird gelöst durch ein Verfahren mit den Merkmalen des Anspruchs 1 oder des Anspruchs 8.

Zusammengefasst werden zum Überprüfen des eingestellten Konfigurationsparameterwerts zwei verschiedene Fassungen herangezogen. Die erste Fassung ist vorzugsweise diejenige, die in der Vorrichtung standardmäßig für den zugrundeliegenden Konfigurationsparameter verwendet und mittels einer ersten Darstellungsform des Computerprogramms angezeigt wird. Die erste Fassung ist dann als Anzeigefassung bzw. angezeigte Fassung sichtbar. Sie stellt also die dem Bediener über die Anzeigeeinrichtung wiedergegebene Form des eingestellten Konfigurationsparameterwerts gemäß der ersten Fassung dar. Die Überprüfung im Rahmen des Verfahrens kann somit insbesondere auf die angezeigte erste Fassung gestützt werden (die auf der ersten Fassung beruht). Es ist aber auch möglich, die zweite Fassung derart von der ersten Fassung abzuleiten, dass etwaige Fehler bezüglich der ersten Darstellungsform des Computerprogramms in der zweiten Fassung zum Tragen kommen.

Die erste Darstellungsform ist zur Darstellung der ersten Fassung angepasst. Die erste Darstellungsform ist allerdings potentiell fehlerbehaftet und kann eine falsche Anzeige der ersten Fassung verursachen (z.B. wenn eine Anzeigeroutine des Computerprogramms bezüglich der ersten Darstellungsform einen Programmierfehler aufweist).

Die zweite Fassung wird erzeugt, um den eingestellten Konfigurationsparameterwert relativ zu der ersten Fassung überprüfen zu können. Hierzu wird die zweite Fassung von dem Computerprogramm vorzugsweise unterschiedlich zu der ersten Fassung verarbeitet, wobei z.B. ein bedienerseitiges oder automatisches Vergleichen der Fassungen in Betracht kommt, wie nachfolgend noch genauer erläutert wird. Die zweite Fassung wird zusätzlich zu der ersten Fassung angezeigt und kann daher ebenso wie die erste Fassung als eine (zweite) Anzeigefassung bezeichnet werden. Es ist jedoch auch ein computergestütztes (automatisches) Vergleichen der beiden Fassungen vorgesehen, wobei die zweite Fassung hierfür nicht angezeigt werden muss.

Das Verfahren zeichnet sich dadurch aus, dass es universell mit unterschiedlichsten Browsertechnologien kompatibel ist, wobei das Verfahren so ausgestaltet ist, dass es eine Überprüfung eines betreffenden Browsers in Bezug auf eine Darstellungsroutine (erste Darstellungsform) ermöglicht. Hierbei ist es nicht unbedingt entscheidend, um welche Darstellungsroutine es sich handelt. Wichtig ist vielmehr, dass auf der Grundlage der ersten Fassung eine zweite Fassung des eingestellten Konfigurationsparameterwerts erzeugt und die Überprüfung auf der Grundlage der beiden Fassungen durchgeführt wird. Die zweite Fassung ist unabhängig von der ersten Darstellungsform. Auf diese Weise wird die Überprüfung auf ein breiteres Datenfundament gestellt, welches den Unwägbarkeiten des Browsers Rechnung trägt.

Allgemein kann die erste Datenform eine Textform sein. Die Textform kann durch eine Textkodierung oder allgemein durch eine Zeichenkodierung gebildet sein (z.B. als Zahlenwert oder als String). Wie oben erwähnt kann die erste Datenform diejenige Datenform sein, die standardmäßig in der Vorrichtung, insbesondere in der Benutzerschnittstellte verwendet wird. Beispielsweise weist jeder Standardbrowser eine Darstellungsroutine zum Anzeigen von Text auf.

Die zweite Datenform kann vorzugsweise eine Grafikform sein, d.h. der eingestellte Konfigurationsparameterwert kann als eine Grafik (als digitales Bild bzw. Bilddatei, z.B. bitmap- oder jpeg-Datei) kodiert sein. Allgemein kann der eingestellte Konfigurationsparameterwert in der zweiten Datenform durch eine Vielzahl von Pixeln repräsentiert werden, denen jeweils mindestens ein Helligkeitswert zugeordnet ist.

Das Umwandlungsprogramm ist unabhängig von dem Computerprogramm, sodass z.B. die erzeugte Grafik nicht dem angezeigten Text entspricht, wenn der Text aufgrund der ersten Darstellungsform fehlerhaft angezeigt wird. Das Umwandlungsprogramm ist also nicht Bestandteil des Computerprogramms. Mit anderen Worten wird die zweite Fassung nicht als Screenshot der angezeigten ersten Fassung erzeugt. Vielmehr kann die zweite Fassung z.B. mittels eines Bildgenerators erzeugt werden. Ein derartiger Bildgenerator (oder Bilderzeugungsprogramm) kann als ausführbare Software Bestandteil der Betriebssoftware sein, sodass die zweite Fassung unmittelbar unter Verwendung der Betriebssoftware erzeugt werden kann. Es ist aber auch denkbar, den z.B. als Text kodierten Konfigurationsparameterwert an einen zentralen Server zu übermitteln, um die Umwandlung auf diesem Server durchzuführen. Sodann kann die zweite Fassung wieder an die Vorrichtung und insbesondere an die Benutzerschnittstelle übermittelt werden.

Die beiden Fassungen des eingestellten Konfigurationsparameterwerts können z.B. unmittelbar benachbart und/oder zeitgleich angezeigt werden. Ein Bediener der Benutzerschnittstelle kann dann die beiden Fassungen miteinander vergleichen und die Konfigurierung durch den eingestellten Konfigurationsparameterwert bestätigen, wenn die beiden Fassungen bezüglich des eingestellten Konfigurationsparameterwerts äquivalent sind, d.h. unabhängig von der jeweiligen Darstellungsform identisch sind.

Die erste Fassung und die zweite Fassung können gemeinsam, insbesondere überlagert, an der Anzeigeeinrichtung angezeigt werden. Zusätzlich oder alternativ ist es möglich, die erste Fassung und die zweite Fassung in voneinander verschiedenen Farben an der Anzeigeeinrichtung anzuzeigen. Die Überprüfung kann hierdurch vereinfacht werden, wobei prinzipiell denkbare Vergleichsfehler durch den Bediener besser vermieden werden können.

Das Verfahren kann ferner so ausgestaltet sein, dass wenigstens ein Eingabeelement der Benutzerschnittstelle aktiviert wird, um die Eingabe eines Prüfungsergebnisses durch einen Bediener der Vorrichtung zu ermöglichen. Das Prüfungsergebnis kann bedienerseitig durch visuelle Prüfung des eingestellten Konfigurationsparameterwerts auf der Grundlage der angezeigten ersten Fassung und/oder der angezeigten zweiten Fassung ermittelt werden. Das Eingabeelement dient also mit anderen Worten dazu, den eingestellten Konfigurationsparameterwert zu bestätigen, wenn die Prüfung ergibt, dass kein Fehler vorliegt.

Vorzugsweise wird das wenigstens eine Eingabeelement erst aktiviert, wenn die erste und zweite Fassung angezeigt werden. Auf diese Weise kann eine unbeabsichtigte Bestätigung ohne vorherige Prüfung zuverlässig unterbunden werden.

Das wenigstens eine Eingabeelement kann allgemein als ein grafisches Eingabeelement ausgebildet sein. Es ist somit insbesondere möglich, dass zusätzlich zu der ersten Fassung und der zweiten Fassung wenigstens ein grafisches Eingabeelement an der Anzeigeeinrichtung angezeigt wird. Beispiele für eine grafisches Eingabeelement sind ja/nein-Grafiken, tick-boxen und dergleichen. Die Anzeigeeinrichtung kann zur intuitiven Bedienung allgemein auch berührungsempfindlich, d.h. als touch screen ausgebildet sein. Somit kann der Bediener ein ermitteltes Prüfergebnis durch schlichtes Berühren eines oder mehrerer Eingabeelemente an der Benutzerschnittstelle eingeben.

Die Anzeige eines Eingabeelements kann benachbart zu der angezeigten ersten und angezeigten zweiten Fassung oder auch überlagert mit den beiden Fassungen ausgeführt sein. Das Eingabeelement muss zudem nicht unbedingt sichtbar sein. Beispielsweise kann das Element identisch zu einer jeweiligen angezeigten Fassung ausgebildet und dieser überlagert sein (Verlinkung mit angezeigter Fassung).

Die Vorrichtung wird durch den eingestellten Konfigurationsparameterwert konfiguriert. Der Begriff "Konfigurieren" bedeutet, dass der eingestellte Konfigurationsparameterwert für den Betrieb der Vorrichtung zugrunde gelegt wird, d.h. die Vorrichtung wird in Abhängigkeit des eingestellten Konfigurationsparameterwerts betrieben. Eine derartige effektive Konfigurierung durch den eingestellten Konfigurationsparameterwert wird vorzugsweise von einer vorherigen Bestätigung abhängig gemacht. Insbesondere kann es erforderlich sein, dass der Bediener über das wenigstens eine Eingabeelement ein oder mehrere erforderliche positive Prüfungsergebnisse eingibt, um den Betrieb der Vorrichtung in Abhängigkeit des eingestellten Konfigurationsparameterwert freizugeben.

Es ist möglich, dass wenigstens ein erstes Eingabeelement der Benutzerschnittstelle einem von dem Bediener ermittelten ersten Prüfungsergebnis zugeordnet ist, welches auf einer visuellen (d.h. bedienerseitigen) Prüfung der Äquivalenz des eingestellten Konfigurationsparameterwerts zwischen der angezeigten ersten Fassung und der angezeigten zweiten Fassung beruht. Insbesondere können zwei erste Eingabeelemente in Form eines "Ja-buttons" (Äquivalenz liegt vor) und eines "Nein-buttons" (keine Äquivalenz) vorgesehen sein. Wenn beide Fassungen äquivalent sind, kann mit ausreichender Wahrscheinlichkeit davon ausgegangen werden, dass die angezeigte Fassung des Konfigurationsparameterwerts dem tatsächlich an der Vorrichtung eingestellten Konfigurationsparameterwert entspricht. Mit anderen Worten kann davon ausgegangen werden, dass der Parameterwert "auf dem Weg vom Speicher zur Anzeige" nicht verfälscht wurde.

Es versteht sich, dass auch andere erste Eingabeelemente (auch ein einzelnes Eingabeelement) denkbar sind, um dieselbe Prüfungsinformation einzugeben. Der Vorteil von zwei ersten Eingabeelementen besteht jedoch darin, dass das Risiko einer fehlerhaften Eingabe reduziert wird.

Selbstverständlich kann es auch zweckmäßig sein, den eingestellten Konfigurationsparameterwert als solches zu überprüfen (im Falle eines Zahlenwerts bezüglich der Höhe). Hierzu kann wenigstens ein zweites Eingabeelement der Benutzerschnittstelle einem von dem Bediener ermittelten zweiten Prüfungsergebnis zugeordnet sein, welches auf einer visuellen (d.h. bedienerseitigen) Prüfung der Äquivalenz des eingestellten Konfigurationsparameterwerts zwischen der angezeigten ersten oder zweiten Fassung und einem von dem Benutzer oder Bediener gewünschten Konfigurationsparameterwert beruht. Das wenigstens eine zweite Eingabeelement kann ebenso wie das wenigstens eine erste Eingabeelement ausgestaltet sein.

Abweichend zu dem Fall, dass die erste und zweite Fassung angezeigt werden und der Bediener die Überprüfung "manuell" durchführt, ist es auch erfindungsgemäß auch vorgesehen, die Überprüfung zumindest auf Äquivalenz der beiden Fassungen automatisiert durchzuführen. Denkbar ist auch eine Kombination von bedienerseitiger und automatischer Prüfung, um ein Maximum an Sicherheit bei der Überprüfung zu gewährleisten.

Im Fall einer automatischen Überprüfung wird der Vergleich der ersten und zweiten Fassung automatisch durchgeführt, wobei im Falle einer Abweichung automatisch ein Fehlersignal erzeugt wird. Andernfalls kann der eingestellte Wert im Hinblick auf den gewünschten Wert durch einen Benutzer bestätigt oder abgelehnt werden.

Das Verfahren kann also ferner ein Vergleichen der ersten Fassung und der zweiten Fassung umfassen, um eine Äquivalenz des eingestellten Konfigurationsparameterwerts zwischen der ersten Fassung und der zweiten Fassung festzustellen, wobei ein Fehlersignal erzeugt wird, wenn keine Äquivalenz des eingestellten Konfigurationsparameterwerts zwischen der ersten Fassung und der zweiten Fassung festgestellt wird. Das Vergleichen geschieht insbesondere durch eine Steuereinheit der Vorrichtung und kann auf die angezeigte erste Fassung und die angezeigte zweite Fassung gestützt werden. Das Vergleichen kann aber auch z.B. auf einen externen Server ausgelagert werden. Im Falle eines erzeugten Fehlersignals kann ein Fehler an der Anzeigeeinrichtung angezeigt werden, um den Bediener zu informieren. Ferner ist es bevorzugt, dass eine Bestätigung des angezeigten Konfigurationsparameterwerts über Eingabeelemente nur dann möglich ist, wenn kein Fehlersignal erzeugt wurde. Beispielsweise können zweite Eingabeelemente erst dann aktiviert oder angezeigt werden, wenn sichergestellt ist, dass in Bezug auf den betreffenden Konfigurationsparameterwert kein Fehlersignal erzeugt worden ist.

Die zweite Fassung wird erfindungsgemäß unter Verwendung eines Abbildungsprogramms erzeugt, welches dazu ausgebildet ist, ein Abbild der an der Anzeigeeinrichtung angezeigten ersten Fassung (d.h. der ersten Anzeigefassung) zu erzeugen. Das Abbildungsprogramm kann demnach dazu ausgebildet sein, einen sogenannten "screenshot" der angezeigten ersten Fassung zu erstellen. Die zweite Fassung kann dann mit der intern an der Vorrichtung hinterlegten ersten Fassung verglichen werden, um die automatische Prüfung durchzuführen.

Erfindungsgemäß ist ferner ein Erzeugen einer dritten Fassung des eingestellten Konfigurationsparameterwerts auf der Grundlage der zweiten Fassung vorgesehen. Dies geschieht indem die zweite Fassung unter Verwendung eines Auswertungsprogramms in Bezug auf die erste Datenform ausgewertet wird, wobei die dritte Fassung den eingestellten Konfigurationsparameterwert in der ersten Datenform repräsentiert. Ferner umfasst das Verfahren der Ausführungsform ein Vergleichen der ersten Fassung und der dritten Fassung, um eine Äquivalenz des eingestellten Konfigurationsparameterwerts zwischen der ersten Fassung und der dritten Fassung festzustellen, wobei ein Fehlersignal erzeugt wird, wenn keine Äquivalenz des eingestellten Konfigurationsparameterwerts zwischen der ersten Fassung und der dritten Fassung festgestellt wird.

Im Hinblick auf die Auswertung der zweiten Fassung ist es möglich, dass die zweite Fassung über eine Kommunikationsschnittstelle der Vorrichtung an einen zentralen Server übermittelt wird. Das Auswertungsprogramm kann dann auf dem zentralen Server ausgeführt werden, wobei die dritte Fassung danach über die Kommunikationsschnittstelle von dem zentralen Server empfangen wird. Der zentrale Server kann also mit dem zentralen Server kommunizieren. Auf diese Weise können insbesondere komplexere Auswertungsaufgaben ausgelagert werden.

Alternativ ist es sogar möglich, sowohl das Auswerten als auch das Vergleichen der ersten und dritten Fassung auf einen Server auszulagern. Mit anderen Worten können die erste Fassung und die zweite Fassung über eine Kommunikationsschnittstelle der Vorrichtung an einen zentralen Server übermittelt werden, wobei das Auswertungsprogramm und der Schritt des Vergleichens der ersten Fassung und der dritten Fassung auf dem zentralen Server ausgeführt werden. Ein Vergleichsergebnis kann dann über die Kommunikationsschnittstelle von dem zentralen Server empfangen werden, wobei das Vergleichsergebnis angibt, ob eine Äquivalenz des eingestellten Konfigurationsparameterwerts zwischen der ersten Fassung und der dritten Fassung festgestellt worden ist. Das Fehlersignal wird dann vorzugsweise in Abhängigkeit des empfangenen Vergleichsergebnisses erzeugt.

Wie bereits weiter oben erwähnt, wird die zweite Fassung gemäß einer Ausführungsform unter Verwendung eines Abbildungsprogramms erzeugt, welches dazu ausgebildet ist, ein Abbild der an der Anzeigeeinrichtung angezeigten ersten Fassung zu erzeugen. Das Auswertungsprogramm ist in diesem Fall vorzugsweise ein Computerprogramm zur automatischen Texterkennung (Texterkennungsprogramm, insbesondere Optical Character Recognition, OCR). Solche Programme sind als Standardsoftware günstig verfügbar und können somit leicht auf Standardrechnern installiert und bereitgehalten werden, wobei die Erkennungszuverlässigkeit bereits ein hohes Niveau erreicht.

Gemäß einer weiteren Ausführungsform wird, wenn kein Fehlersignal erzeugt wird, wenigstens ein Eingabeelement der Benutzerschnittstelle aktiviert, um die Eingabe eines Prüfungsergebnisses durch einen Bediener der Vorrichtung zu ermöglichen, wobei das Prüfungsergebnis bedienerseitig durch visuelle Prüfung des eingestellten Konfigurationsparameterwerts auf der Grundlage zumindest einer an der Anzeigeeinrichtung angezeigten Fassung des eingestellten Konfigurationsparameterwerts ermittelt wird. Das wenigstens eine Eingabeelement, welches dem weiter oben genannten zweiten Eingabeelement entsprechen und ebenso ausgestaltet sein kann, ist vorzugsweise einem Prüfungsergebnis zugeordnet, welches auf einer visuellen Prüfung der Äquivalenz des eingestellten Konfigurationsparameterwerts zwischen der angezeigten Fassung und einem von dem Benutzer gewünschten Konfigurationsparameterwert beruht. Bei der angezeigten Fassung kann es sich um die erste, zweite, und/oder dritte Fassung handeln, die an der Anzeigeeinrichtung angezeigt werden. Vorzugsweise wird die Vorrichtung durch den eingestellten Konfigurationsparameterwert konfiguriert bzw. betrieben, wenn der Bediener über das Eingabeelement bei festgestellter Äquivalenz das entsprechende positive Prüfungsergebnis eingibt (Bestätigung des eingestellten Werts). Das Verfahren kann somit allgemein das Eingeben eines oder mehrerer Prüfungsergebnisse durch den Bediener umfassen.

Die Erfindung bezieht sich auch auf eine Vorrichtung, welche durch einen an der Vorrichtung eingestellten Konfigurationsparameterwert elektronisch konfigurierbar ist. Die Vorrichtung weist eine Benutzerschnittstelle mit einer Anzeigeeinrichtung sowie eine Steuereinrichtung auf. Die Benutzerschnittstelle ist dazu ausgebildet, einen eingestellten Konfigurationsparameterwert unter Verwendung eines Computerprogramms, insbesondere eines Browsers, zum Darstellen von Daten an der Anzeigeeinrichtung anzuzeigen, und wobei die Steuereinrichtung dazu ausgebildet ist, das Verfahren nach einem der hierin offenbarten Ausführungsformen durchzuführen.

Die Steuereinrichtung der Vorrichtung kann auf der Grundlage des eingestellten Konfigurationsparameterwerts eine industrielle Maschine oder einen industriellen Prozess steuern (z.B. den nachstehend genannten Sensor, der insbesondere als ein Laserscanner ausgebildet sein kann). Zudem kann die Steuereinrichtung aus der industriellen Maschine den Konfigurationsparameterwert auslesen, der dann, wie hierin beschrieben, überprüft wird.

Die Vorrichtung kann wenigstens einen Sensor zur Überwachung eines Überwachungsbereichs aufweisen, wobei der eingestellte Konfigurationsparameterwert einen Parameter zur Definition des Überwachungsbereichs repräsentiert. Der Konfigurationsparameterwert besitzt somit eine besondere Relevanz im Hinblick auf eine zu gewährleistende Betriebssicherheit. Das geschilderte Prüfungsverfahren ist für solche Parameter besonders vorteilhaft, jedoch nicht auf solche Parameter beschränkt.

Die Erfindung wird nachfolgend lediglich rein beispielhaft anhand der Zeichnungen erläutert, in denen:
- Fig. 1: eine Vorrichtung mit einer Benutzerschnittstelle zeigt;
- Fig. 2: ein Blockdiagramm zur Veranschaulichung eines erfindungsgemäßen Verfahrens zum Überprüfen eines eingestellten Konfigurationsparameterwerts nach einer ersten Ausführungsform zeigt;
- Fig. 3: ein Blockdiagramm zur Veranschaulichung eines anderen erfindungsgemäßen Verfahrens zum Überprüfen eines eingestellten Konfigurationsparameterwerts nach einer zweiten Ausführungsform zeigt.

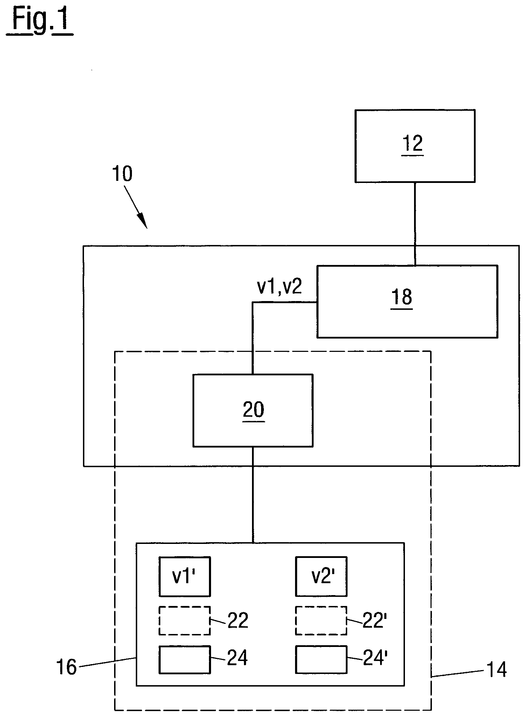

In Fig. 1 ist schematisch eine Vorrichtung 10 gezeigt, welche durch einen an der Vorrichtung 10 eingestellten Konfigurationsparameterwert elektronisch konfigurierbar ist. Die Vorrichtung 10 weist einen Sensor 12 zur Überwachung eines Überwachungsbereichs (nicht gezeigt) auf, wobei der eingestellte Konfigurationsparameterwert einen Parameter zur Definition des Überwachungsbereichs repräsentiert.

Die Vorrichtung 10 weist zudem eine Benutzerschnittstelle 14 mit einer Anzeigeeinrichtung 16 auf, die als berührungsempfindlicher Bildschirm (touch screen) ausgebildet ist. Die Benutzerschnittstelle 14 ist allgemein dazu ausgebildet, einen an der Vorrichtung 10 eingestellten Konfigurationsparameterwert unter Verwendung eines Browsers 20 anzuzeigen. Der Browser 20 stellt ein Computerprogramm (Software) zum Darstellen von Daten an der Anzeigeeinrichtung 16 dar. Der Browser 20 wird durch einen herkömmlichen Webbrowser, z.B. Internet Explorer, Chrome, Opera oder dergleichen gebildet.

Eine Steuereinrichtung 18 der Vorrichtung 10 ist dazu ausgebildet, ein Verfahren zum Überprüfen des eingestellten Konfigurationsparameterwerts durchzuführen. Der eingestellte Konfigurationsparameterwert liegt in einer ersten Fassung v1 vor, die z.B. in einem internen Speicher der Vorrichtung 10 gespeichert sein kann. Der Speicher (nicht gezeigt) kann z.B. ein nicht-flüchtiger Speicher sein. Der eingestellte Konfigurationsparameterwert stellt einen elektronischen Parameterwert dar, der an der Vorrichtung 10 oder einem mit der Vorrichtung 10 verbundenen Steuerungsmittel gespeichert und zur Konfigurierung eines Betriebs der Vorrichtung 10 vorgesehen ist. Die erste Fassung v1 repräsentiert den eingestellten Konfigurationsparameterwerts vorzugsweise in einer Textform, d.h. die erste Fassung v1 ist vorzugsweise eine elektronische Zeichenkodierung des eingestellten Konfigurationsparameterwerts. Dies ist vorzugsweise eine Standarddatenform der Vorrichtung 10, wobei zumindest einige Konfigurationsparameterwerte zum Betrieb der Vorrichtung 10 in der Standarddatenform gespeichert sind. Die erste Fassung v1 kann unmittelbar den eingestellten Konfigurationsparameterwert repräsentieren, d.h. die erste Fassung v1 kann den eingestellten Konfigurationsparameterwert bilden.

Ein Verfahren zum Überprüfen des eingestellten Konfigurationsparameterwerts dient allgemein zur Feststellung, ob die erste Fassung v1, die intern an der Vorrichtung 10 gespeichert ist, richtig an der Anzeigeeinrichtung 16 angezeigt wird. Mit anderen Worten soll durch das Verfahren überprüft werden, ob die erste Fassung v1 einer angezeigten ersten Fassung v1' entspricht. Die erste Fassung v1 und die angezeigte erste Fassung v1' entsprechen einander, wenn sie bezüglich des durch die Fassungen jeweils repräsentierten Konfigurationsparameterwerts äquivalent sind. Die Überprüfung erfolgt im Hinblick auf potentielle Fehler des Browsers 20, der zum Anzeigen der ersten Fassung v1 verwendet wird. Der Browser 20 ist allgemein dazu ausgebildet, Daten in einer von mehreren Darstellungsformen anzuzeigen, z.B. indem der Browser zum einen einen String (Textform) und zum anderen eine Grafik darstellt. Die Darstellungsform hängt vorzugsweise von der jeweiligen Datenform ab, d.h. die Darstellungsform wird durch den Browser 20 in Abhängigkeit der anzuzeigenden Datenform ausgewählt. Die erste Fassung v1 liegt insbesondere in Textform vor. Entsprechend wird im Browser 20 eine Textdarstellungsform zur Anzeige der ersten Fassung v1 verwendet. Die Textdarstellungsform kann durch eine oder mehrere Darstellungsfunktionen oderroutinen des Browsers 20 implementiert sein.

Der eingestellte Konfigurationsparameterwert wird nun auf der Grundlage der ersten Fassung v1 und einer zweiten Fassung v2 überprüft. Die zweite Fassung v2 wird hierzu zunächst auf der Grundlage der ersten Fassung v1 erzeugt, wobei zumindest die erste Fassung v1 unter Verwendung einer ersten Darstellungsform des Browsers 20 an der Anzeigeeinrichtung 16 angezeigt wird (vgl. Fig. 1). Der Bediener der Vorrichtung 10 sieht dann die angezeigte erste Fassung v1'. Eine Abweichung zwischen der ersten Fassung v1 und der angezeigten ersten Fassung v1' kann auf der Grundlage der ersten Fassung v1 und der zweiten Fassung v2 auf unterschiedliche Weisen durchgeführt werden.

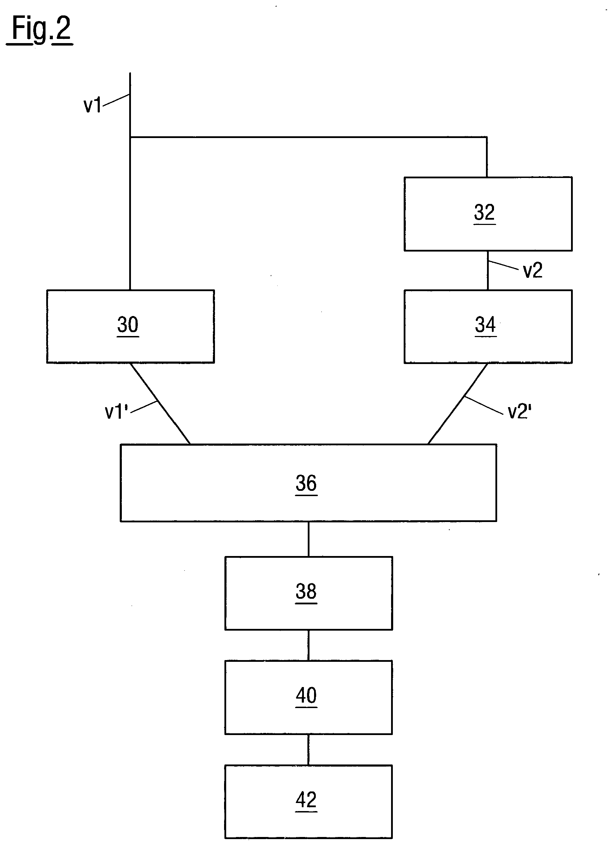

Eine erste Ausführungsform des Verfahrens wird anhand von Fig. 2 erläutert. Das Verfahren geht von der ersten Fassung v1 aus, die in Schritt 30 über die Anzeigeeinrichtung 16 und unter Verwendung des Browsers 20 (Fig. 1) angezeigt wird. Danach ist an der Anzeigeeinrichtung 16 die angezeigte erste Fassung v1' sichtbar (Fig. 1). In Schritt 32 wird die erste Fassung v1 unter Verwendung eines Bild- oder Grafikerzeugungsprogramms in die zweite Fassung v2 umgewandelt. Die zweite Fassung v2 repräsentiert den eingestellten Konfigurationsparameterwert in Form einer Bild- oder Grafikdatei. Danach wird die zweite Fassung v2 an der Anzeigeeinrichtung 16 und unter Verwendung des Browsers 20 angezeigt (Schritt 34). Da die zweite Fassung v2 eine Bild- oder Grafikdatei ist, verwendet der Browser 20 eine Bild- oder Grafikdarstellungsform zur Anzeige der zweiten Fassung v2.

Die angezeigte erste Fassung v1' und die angezeigte zweite Fassung v2' werden nun im Schritt 36 durch den Bediener der Vorrichtung 10 geprüft. Hierzu vergleicht der Bediener die beiden Fassungen v1' und v2' miteinander und mit einem gewünschten Sollwert vt des eingestellten Konfigurationsparameterwerts. In Schritt 38 gibt der Bediener über zwei erste Eingabeelemente 22 und 22' an, ob die erste angezeigte Fassung v1' und die zweite angezeigte Fassung v2' äquivalent sind (vgl. Fig. 1). Zutreffendenfalls wird der Bediener eines der ersten Eingabeelement 22 betätigen, andernfalls das andere erste Eingabeelement 22'. In Schritt 40 soll der Bediener über zwei zweite Eingabeelemente 24 und 24' angeben, ob die erste angezeigte Fassung v1' bzw. die zweite angezeigte Fassung v2' äquivalent zu dem gewünschten Sollwert vt sind. Zutreffendenfalls wird der Bediener das eine zweite Eingabeelement 24 betätigen, andernfalls das andere zweite Eingabeelement 24' (vgl. Fig. 1).

In Schritt 42 wird in Abhängigkeit der bedienerseitigen Eingaben über die Eingabeelemente 22, 22', 24, 24' in der Steuereinrichtung 18 entschieden, ob die Vorrichtung 10 mit dem Sensor 12 in Abhängigkeit von der ersten Fassung v1 betrieben wird oder nicht. Wenn der Bediener in Schritt 38 und Schritt 40 eine Äquivalenz angibt (d.h. der Bediener betätigt die Eingabeelemente 22 und 24), dann wird die Vorrichtung 10 mit dem Sensor 12 in Abhängigkeit von der ersten Fassung v1 betrieben. Andernfalls wird ein Fehlersignal erzeugt und die Vorrichtung 10 mit dem Sensor 12 wird nicht in Abhängigkeit der ersten Fassung v1 betrieben. Der eingestellte Konfigurationsparameterwert gemäß der ersten Fassung v1 wird also nur dann für den Betrieb freigegeben, wenn der Bediener den Wert bezüglich seiner Äquivalenz zwischen den angezeigten Fassungen v1', v2' sowie bezüglich seiner Höhe bestätigt hat.

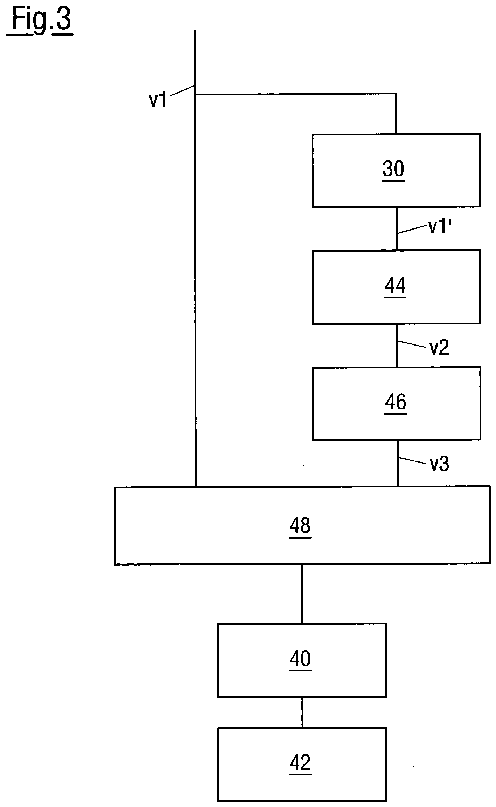

Eine zweite Ausführungsform des erfindungsgemäßen Verfahrens wird anhand von Fig. 3 erläutert. Die zweite Ausführungsform unterscheidet sich von der ersten Ausführungsform im Wesentlichen dadurch, dass der Vergleich auf Äquivalenz zwischen der ersten Fassung v1 und der zweiten Fassung v2 automatisch durchgeführt wird, d.h. eine visuelle Prüfung auf Äquivalenz der angezeigten ersten Fassung v1' und der angezeigten zweiten Fassung v2' ist nicht erforderlich. Das Verfahren beginnt mit der ersten Fassung v1, die wiederum in Schritt 30 als angezeigte erste Fassung v1' zur Anzeige gebracht wird. In Schritt 44 wird die zweite Fassung v2 erzeugt, indem unter Verwendung eines Abbildungsprogramms ein Abbild der ersten angezeigten Fassung v1' erzeugt wird, die auf der ersten Fassung v1 beruht. Danach wird die zweite Fassung v2 unter Verwendung eines Texterkennungsprogramms ausgewertet (Schritt 46). Das Auswertungsergebnis (d.h. der erkannte Text) bildet eine dritte Fassung v3 des eingestellten Konfigurationsparameterwerts. Die dritte Fassung v3 besitzt dieselbe Datenform (Textform) wie die erste Fassung v1.

In Schritt 48 werden die erste Fassung v1 und die dritte Fassung v3 auf Äquivalenz geprüft. Wenn die erste Fassung v1 und die dritte Fassung v3 äquivalent sind werden an der Anzeigeeinrichtung 16 ähnlich wie in der ersten Ausführungsform zweite Eingabeelemente 24, 24' angezeigt, sodass der Bediener eingeben kann, ob die angezeigte erste Fassung v1' mit dem Sollwert vt übereinstimmt (Schritt 40). Wenn der Bediener eine Übereinstimmung mit dem Sollwert vt bestätigt (Betätigung des Eingabeelements 24) wird der Betrieb der Vorrichtung 10 bezüglich des eingestellten Konfigurationsparameterwerts freigeschaltet (Schritt 42). Andernfalls wird ein Fehlersignal erzeugt (im Fall einer negativen Bestätigung, d.h. im Fall einer Betätigung des Eingabeelements 24'). Ein Fehlersignal wird vorzugsweise auch dann erzeugt, wenn der automatische Vergleich der ersten Fassung v1 und der dritten Fassung v3 ergibt, dass die beiden Fassungen nicht äquivalent sind.

### Bezugszeichenliste

- 10: Vorrichtung
- 12: Sensor
- 14: Benutzerschnittstelle
- 16: Anzeigeeinrichtung
- 18: Steuereinrichtung
- 20: Browser
- 22, 22': erstes Eingabeelement
- 24, 24': zweites Eingabeelement
- 30: Anzeigen von v1
- 32: Umwandeln von v1 in v2
- 34: Anzeigen von v2
- 36: Prüfen von v1' und v2'
- 38: Eingabe ob v1'=v2'
- 40: Eingabe ob v1'=vt
- 42: Betreiben der Vorrichtung in Abhängigkeit von v1
- 44: Erzeugen von v2 als Abbild von v1'
- 46: Erzeugen von v3 durch Auswerten von v2
- 48: Prüfen von v1, v1' und v3
- v1: erste Fassung
- v1': angezeigte erste Fassung
- v2: zweite Fassung
- v2': angezeigte zweite Fassung
- v3: dritte Fassung

## Patentansprüche

1. Verfahren zum Überprüfen eines an einer elektronisch konfigurierbaren Vorrichtung (10) eingestellten Konfigurationsparameterwerts,
wobei die Vorrichtung (10) eine Benutzerschnittstelle (14) mit einer Anzeigeeinrichtung (16) aufweist und eine industrielle Maschine ist, welche eingerichtet ist, in Anhängigkeit des eingestellten Konfigurationsparameterwerts betrieben zu werden,
wobei die Benutzerschnittstelle (14) dazu ausgebildet ist, einen eingestellten Konfigurationsparameterwert unter Verwendung eines Webbrowsers (20) zum Darstellen von Daten an der Anzeigeeinrichtung (16) anzuzeigen, wobei das Verfahren umfasst:
- Anzeigen wenigstens einer ersten Fassung (v1) des eingestellten Konfigurationsparameterwerts unter Verwendung einer ersten Darstellungsform des Webbrowsers, wobei die erste Fassung (v1) den eingestellten Konfigurationsparameterwert in einer ersten Datenform repräsentiert;
- Erzeugen einer von der ersten Fassung verschiedenen zweiten Fassung (v2) des eingestellten Konfigurationsparameterwerts auf der Grundlage der ersten Fassung (v1);
- Anzeigen der zweiten Fassung (v2) des eingestellten Konfigurationsparameterwerts unter Verwendung einer zweiten Darstellungsform des Webbrowsers, wobei die zweite Fassung (v2) den eingestellten Konfigurationsparameterwert in einer zweiten Datenform repräsentiert; und
- Überprüfen des eingestellten Konfigurationsparameterwerts auf der Grundlage der ersten Fassung (v1) und zumindest der zweiten Fassung (v2);
wobei die zweite Fassung (v2) erzeugt wird, indem die erste Fassung (v1) unter Verwendung eines Umwandlungsprogramms in die zweite Fassung (v2) umgewandelt wird,
wobei das Umwandlungsprogramm dazu ausgebildet ist, Daten von der ersten Datenform in die zweite Datenform umzuwandeln, und
wobei das Umwandlungsprogramm unabhängig von dem Webbrowser und nicht Bestandteil desselben ist.

2. Verfahren nach Anspruch 1,
wobei die erste Datenform eine Textform und die zweite Datenform eine Grafikform ist.

3. Verfahren nach Anspruch 1,
wobei die erste Fassung (v1) und die zweite Fassung (v2) gemeinsam, insbesondere überlagert, an der Anzeigeeinrichtung (16) angezeigt werden und/oder
wobei die erste Fassung (v1) und die zweite Fassung (v2) in voneinander verschiedenen Farben an der Anzeigeeinrichtung (16) angezeigt werden.

4. Verfahren nach einem der Ansprüche 1 bis 3,
wobei wenigstens ein Eingabeelement der Benutzerschnittstelle (14) aktiviert wird, um die Eingabe eines Prüfungsergebnisses durch einen Bediener der Vorrichtung (10) zu ermöglichen, wobei das Prüfungsergebnis bedienerseitig durch visuelle Prüfung des eingestellten Konfigurationsparameterwerts auf der Grundlage der angezeigten ersten Fassung (v1') und/oder der angezeigten zweiten Fassung (v2') ermittelt wird.

5. Verfahren nach Anspruch 4,
wobei wenigstens ein erstes Eingabeelement (22, 22') der Benutzerschnittstelle (14) einem ersten Prüfungsergebnis zugeordnet ist, welches auf einer Prüfung der Äquivalenz des eingestellten Konfigurationsparameterwerts zwischen der angezeigten ersten Fassung (v1') und der angezeigten zweiten Fassung (v2') beruht.

6. Verfahren nach Anspruch 4 oder 5,
wobei wenigstens ein zweites Eingabeelement (24, 24') der Benutzerschnittstelle (14) einem zweiten Prüfungsergebnis zugeordnet ist, welches auf einer Prüfung der Äquivalenz des eingestellten Konfigurationsparameterwerts zwischen der angezeigten ersten oder zweiten Fassung (v1', v2') und einem von dem Bediener gewünschten Konfigurationsparameterwert (vs) beruht.

7. Verfahren nach Anspruch 1 oder 2,
wobei das Verfahren ferner ein Vergleichen der ersten Fassung (v1) und der zweiten Fassung (v2) umfasst, um eine Äquivalenz des eingestellten Konfigurationsparameterwerts zwischen der ersten Fassung (v1) und der zweiten Fassung (v2) festzustellen,
wobei ein Fehlersignal erzeugt wird, wenn keine Äquivalenz des eingestellten Konfigurationsparameterwerts zwischen der ersten Fassung (v1) und der zweiten Fassung (v2) festgestellt wird.

8. Verfahren zum Überprüfen eines an einer elektronisch konfigurierbaren Vorrichtung (10) eingestellten Konfigurationsparameterwerts,
wobei die Vorrichtung (10) eine Benutzerschnittstelle (14) mit einer Anzeigeeinrichtung (16) aufweist und eine industrielle Maschine ist, welche eingerichtet ist, in Anhängigkeit des eingestellten Konfigurationsparameterwerts betrieben zu werden,
wobei die Benutzerschnittstelle (14) dazu ausgebildet ist, einen eingestellten Konfigurationsparameterwert unter Verwendung eines Webbrowsers (20) zum Darstellen von Daten an der Anzeigeeinrichtung (16) anzuzeigen, wobei das Verfahren umfasst:
- Anzeigen wenigstens einer ersten Fassung (v1) des eingestellten Konfigurationsparameterwerts unter Verwendung einer ersten Darstellungsform des Webbrowsers, wobei die erste Fassung (v1) den eingestellten Konfigurationsparameterwert in einer ersten Datenform repräsentiert;
- Erzeugen einer von der ersten Fassung verschiedenen zweiten Fassung (v2) des eingestellten Konfigurationsparameterwerts auf der Grundlage der ersten Fassung (v1), wobei die zweite Fassung (v2) unter Verwendung eines Abbildungsprogramms erzeugt wird, welches dazu ausgebildet ist, ein Abbild der an der Anzeigeeinrichtung (16) angezeigten ersten Fassung (v1') zu erzeugen;
- Erzeugen einer dritten Fassung (v3) des eingestellten Konfigurationsparameterwerts auf der Grundlage der zweiten Fassung (v2), indem die zweite Fassung (v2) unter Verwendung eines Auswertungsprogramms in Bezug auf die erste Datenform ausgewertet wird, wobei die dritte Fassung (v3) den eingestellten Konfigurationsparameterwert in der ersten Datenform repräsentiert; und
- Vergleichen der ersten Fassung (v1) und der dritten Fassung (v3), um eine Äquivalenz des eingestellten Konfigurationsparameterwerts zwischen der ersten Fassung (v1) und der dritten Fassung (v3) festzustellen,
wobei ein Fehlersignal erzeugt wird, wenn keine Äquivalenz des eingestellten Konfigurationsparameterwerts zischen der ersten Fassung (v1) und der dritten Fassung (v3) festgestellt wird.

9. Verfahren nach Anspruch 8,
wobei die zweite Fassung (v2) über eine Kommunikationsschnittstelle der Vorrichtung (10) an einen zentralen Server übermittelt wird, wobei das Auswertungsprogramm auf dem zentralen Server ausgeführt wird, und wobei die dritte Fassung (v3) über die Kommunikationsschnittstelle von dem zentralen Server empfangen wird
oder
wobei die erste Fassung (v1) und die zweite Fassung (v2) über eine Kommunikationsschnittstelle der Vorrichtung (10) an einen zentralen Server übermittelt werden, wobei das Auswertungsprogramm und der Schritt des Vergleichens der ersten Fassung (v1) und der dritten Fassung (v3) auf dem zentralen Server ausgeführt werden, wobei ein Vergleichsergebnis über die Kommunikationsschnittstelle von dem zentralen Server empfangen wird, wobei das Vergleichsergebnis angibt, ob eine Äquivalenz des eingestellten Konfigurationsparameterwerts zwischen der ersten Fassung (v1) und der dritten Fassung (v3) festgestellt worden ist, und
wobei das Fehlersignal in Abhängigkeit des empfangenen Vergleichsergebnisses erzeugt wird.

10. Verfahren nach Anspruch 8 oder 9,
wobei das Auswertungsprogramm ein Computerprogramm zur automatischen Texterkennung ist.

11. Verfahren nach einem der Ansprüche 7 bis 10,
wobei, wenn kein Fehlersignal erzeugt wird, wenigstens ein Eingabeelement (24, 24') der Benutzerschnittstelle (14) aktiviert wird, um die Eingabe eines Prüfungsergebnisses durch einen Bediener der Vorrichtung (10) zu ermöglichen, wobei das Prüfungsergebnis bedienerseitig durch visuelle Prüfung des eingestellten Konfigurationsparameterwerts auf der Grundlage zumindest einer an der Anzeigeeinrichtung (16) angezeigten Fassung (v1', v2') des eingestellten Konfigurationsparameterwerts ermittelt wird.

12. Vorrichtung, welche durch einen an der Vorrichtung eingestellten Konfigurationsparameterwert elektronisch konfigurierbar ist,
wobei die Vorrichtung (10) eine Benutzerschnittstelle (14) mit einer Anzeigeeinrichtung (16) sowie eine Steuereinrichtung (18) aufweist,
wobei die Benutzerschnittstelle (14) dazu ausgebildet ist, einen eingestellten Konfigurationsparameterwert unter Verwendung eines Browsers (20) zum Darstellen von Daten an der Anzeigeeinrichtung (16) anzuzeigen, und wobei die Steuereinrichtung (18) dazu ausgebildet ist, das Verfahren nach einem der vorhergehenden Ansprüche durchzuführen.

13. Vorrichtung nach Anspruch 12,
wobei die Vorrichtung (10) wenigstens einen Sensor (12) zur Überwachung eines Überwachungsbereichs aufweist, wobei der eingestellte Konfigurationsparameterwert einen Parameter zur Definition des Überwachungsbereichs repräsentiert.

## Claims

1. A method of checking a configuration parameter value set at an electronically configurable apparatus (10),
wherein the apparatus (10) has a user interface (14) having a display device (16) and is an industrial machine which is configured to be operated in dependence on the set configuration parameter value;
wherein the user interface (14) is configured to display a set configuration parameter value using a web browser (20) for presenting data at the display device (16);
and wherein the method comprises:
- displaying at least a first version (v1) of the set configuration parameter value using a first presentation form of the web browser, wherein the first version (v1) represents the set configuration parameter value in a first data form;
- generating a second version (v2) of the set configuration parameter value, which is different from the first version, on the basis of the first version (v1);
- displaying the second version (v2) of the set configuration parameter value using a second presentation form of the web browser, wherein the second version (v2) represents the set configuration parameter value in a second data form; and
- checking the set configuration parameter value on the basis of the first version (v1) and at least of the second version (v2),
wherein the second version (v2) is generated in that the first version (v1) is converted into the second version (v2) using a conversion program;
wherein the conversion program is configured to convert the data from the first data form into the second data form; and
wherein the conversion program is independent of the web browser and is not a component thereof.

2. A method in accordance with claim 1,
wherein the first data form is a text form and the second data form is a graphical form.

3. A method in accordance with claim 1,
wherein the first version (v1) and the second version (v2) are displayed together, in particular superposed, at the display device (16); and/or
wherein the first version (v1) and the second version (v2) are displayed at the display device (16) in mutually different colors.

4. A method in accordance with any one of the claims 1 to 3,
wherein at least one input element of the user interface (14) is activated to enable the input of a check result by an operator of the apparatus (10), with the check result being determined at the operator side by a visual check of the set configuration parameter value on the basis of the displayed first version (v1') and/or of the displayed second version (v2').

5. A method in accordance with claim 4,
wherein at least one first input element (22, 22') of the user interface (14) is associated with a first check result which is based on a check of the equivalence of the set configuration parameter value between the displayed first version (v1') and the displayed second version (v2').

6. A method in accordance with claim 4 or claim 5,
wherein at least one second input element (24, 24') of the user interface (14) is associated with a second check result which is based on a check of the equivalence of the set configuration parameter value between the displayed first or second versions (v1', v2') and a configuration parameter value (vs) desired by the operator.

7. A method in accordance with claim 1 or claim 2,
wherein the method further comprises a comparison of the first version (v1) and the second version (v2) to determine an equivalence of the set configuration parameter value between the first version (v1) and the second version (v2); and
wherein an error signal is generated if no equivalence of the set configuration parameter value is determined between the first version (v1) and the second version (v2).

8. A method of checking a configuration parameter value set at an electronically configurable apparatus (10),
wherein the apparatus (10) has a user interface (14) having a display device (16) and is an industrial machine which is configured to be operated in dependence on the set configuration parameter value;
wherein the user interface (14) is configured to display a set configuration parameter value using a web browser (20) for presenting data at the display device (16);
and wherein the method comprises:
- displaying at least a first version (v1) of the set configuration parameter value using a first presentation form of the web browser, wherein the first version (v1) represents the set configuration parameter value in a first data form;
- generating a second version (v2) of the set configuration parameter value, which is different from the first version, on the basis of the first version (v1), wherein the second version (v2) is generated using an imaging program which is configured to generate an image of the first version (v1') displayed at the display device;
- generating a third version (v3) of the set configuration parameter value on the basis of the second version (v2) in that the second version (v2) is evaluated with respect to the first data form using an evaluation program, wherein the third version (v3) represents the set configuration parameter value in the first data form; and
- comparing the first version (v1) and the third version (v3) to determine an equivalence of the set configuration parameter value between the first version (v1) and the third version (v3),
wherein an error signal is generated if no equivalence of the set configuration parameter value is determined between the first version (v1) and the third version (v3).

9. A method in accordance with claim 8,
wherein the second version (v2) is transmitted to a central server via a communication interface of the apparatus (10), with the evaluation program being carried out on the central server, and with the third version (v3) being received by the central server via the communication interface;
or
wherein the first version (v1) and the second version (v2) are transmitted to a central server via a communication interface of the apparatus (10), with the evaluation program and the step of the comparison of the first version (v1) and the third version (v3) being carried out on the central server, with a comparison result being received by the central server via the communication interface, and with the comparison result indicating whether an equivalence of the set configuration parameter value has been determined between the first version (v1) and the third version (v3); and
wherein the error signal is generated in dependence on the received comparison result

10. A method in accordance with claim 8 or claim 9,
wherein the evaluation program is a computer program for automatic text recognition.

11. A method in accordance with any one of the claims 7 to 10,
wherein, if no error signal is generated, at least one input element (24, 24') of the user interface (14) is activated to enable the input of a check result by an operator of the apparatus (10), with the check result at the operator side being determined by a visual check of the set configuration parameter value on the basis of at least one version (v1', v2') of the set configuration parameter value displayed at the display device (16).

12. An apparatus which is electronically configurable by a configuration parameter value set at the apparatus,
wherein the apparatus (10) has a user interface (14), which has a display device (16), and a control device (18);
wherein the user interface (14) is configured to display a set configuration parameter value using a browser (20) for presenting data at the display device (16); and
wherein the control device (18) is configured to carry out the method in accordance with any one of the preceding claims.

13. An apparatus in accordance with claim 12,
wherein the apparatus (10) has at least one sensor (12) for monitoring a monitored zone, with the set configuration parameter value representing a parameter for defining the monitored zone.

## Revendications

1. Procédé de vérification d'une valeur de paramètre de configuration réglée sur un dispositif électroniquement configurable (10),
dans lequel
le dispositif (10) comprend une interface utilisateur (14) ayant un moyen d'affichage (16) et est une machine industrielle conçue pour être exploitée en fonction de la valeur de paramètre de configuration réglée,
l'interface utilisateur (14) est réalisée pour afficher une valeur de paramètre de configuration réglée en utilisant un navigateur web (20) pour afficher des données sur le moyen d'affichage (16),
le procédé consistant à :
- afficher au moins une première version (v1) de la valeur de paramètre de configuration réglée en utilisant une première forme d'affichage du navigateur web, la première version (v1) représentant la valeur de paramètre de configuration réglée sous une première forme de données ;
- générer une deuxième version (v2), différente de la première version, de la valeur de paramètre de configuration réglée sur la base de la première version (v1) ; et
- afficher la deuxième version (v2) de la valeur de paramètre de configuration réglée en utilisant une deuxième forme d'affichage du navigateur web, la deuxième version (v2) représentant la valeur de paramètre de configuration réglée sous une deuxième forme de données ; et
- vérifier la valeur de paramètre de configuration réglée sur la base de la première version (v1) et au moins de la deuxième version (v2) ;
la deuxième version (v2) étant générée en convertissant la première version (v1) en la deuxième version (v2) par utilisation d'un programme de conversion,
le programme de conversion étant réalisé pour convertir des données de la première forme de données en la deuxième forme de données, et
le programme de conversion étant indépendant du navigateur web et ne faisant pas partie de ce dernier.

2. Procédé selon la revendication 1,
dans lequel la première forme de données est une forme textuelle et la deuxième forme de données est une forme graphique.

3. Procédé selon la revendication 1,
dans lequel la première version (v1) et la deuxième version (v2) sont affichées ensemble, en particulier superposées, sur le moyen d'affichage (16), et/ou
la première version (v1) et la deuxième version (v2) sont affichées sur le moyen d'affichage (16) dans des couleurs mutuellement différentes.

4. Procédé selon l'une des revendications 1 à 3,
dans lequel au moins un élément d'entrée de l'interface utilisateur (14) est activé pour permettre l'entrée d'un résultat de vérification par un opérateur du dispositif (10), le résultat de vérification étant déterminé du côté opérateur par une vérification visuelle de la valeur de paramètre de configuration réglée sur la base de la première version affichée (v1') et/ou de la deuxième version affichée (v2').

5. Procédé selon la revendication 4,
dans lequel au moins un premier élément d'entrée (22, 22') de l'interface utilisateur (14) est associé à un premier résultat de vérification basé sur une vérification de l'équivalence de la valeur de paramètre de configuration réglée entre la première version affichée (v1') et la deuxième version affichée (v2').

6. Procédé selon la revendication 4 ou 5,
dans lequel au moins un deuxième élément d'entrée (24, 24') de l'interface utilisateur (14) est associé à un deuxième résultat de vérification basé sur une vérification de l'équivalence de la valeur de paramètre de configuration réglée entre la première ou la deuxième version affichée (v1', v2') et une valeur de paramètre de configuration (vs) souhaitée par l'opérateur.

7. Procédé selon la revendication 1 ou 2,
dans lequel le procédé comprend en outre une comparaison de la première version (v1) et de la deuxième version (v2) pour établir une équivalence de la valeur de paramètre de configuration réglée entre la première version (v1) et la deuxième version (v2),
un signal d'erreur est généré si aucune équivalence de la valeur de paramètre de configuration réglée entre la première version (v1) et la deuxième version (v2) n'est établie.

8. Procédé de vérification d'une valeur de paramètre de configuration réglée sur un dispositif électroniquement configurable (10),
dans lequel
le dispositif (10) comprend une interface utilisateur (14) ayant un moyen d'affichage (16) et est une machine industrielle conçue pour être exploitée en fonction de la valeur de paramètre de configuration réglée,
l'interface utilisateur (14) est réalisée pour afficher une valeur de paramètre de configuration réglée en utilisant un navigateur web (20) pour afficher des données sur le moyen d'affichage (16),
le procédé consistant à :
- afficher au moins une première version (v1) de la valeur de paramètre de configuration réglée en utilisant une première forme d'affichage du navigateur web, la première version (v1) représentant la valeur de paramètre de configuration réglée sous une première forme de données ;
- générer une deuxième version (v2), différente de la première version, de la valeur de paramètre de configuration réglée sur la base de la première version (v1), la deuxième version (v2) étant générée en utilisant un programme d'imagerie qui est réalisé pour générer une image de la première version (v1') affichée sur le moyen d'affichage (16) ;
- générer une troisième version (v3) de la valeur de paramètre de configuration réglée sur la base de la deuxième version (v2), en évaluant la deuxième version (v2) par rapport à la première forme de données par utilisation d'un programme d'évaluation, la troisième version (v3) représentant la valeur de paramètre de configuration réglée sous la première forme de données ; et
- comparer la première version (v1) et la troisième version (v3) pour établir une équivalence de la valeur de paramètre de configuration réglée entre la première version (v1) et la troisième version (v3),
un signal d'erreur étant généré si aucune équivalence de la valeur de paramètre de configuration réglée entre la première version (v1) et la troisième version (v3) n'est établie.

9. Procédé selon la revendication 8,
dans lequel la deuxième version (v2) est transmise à un serveur central via une interface de communication du dispositif (10), le programme d'évaluation étant exécuté sur le serveur central, et la troisième version (v3) étant reçue du serveur central via l'interface de communication,
ou
la première version (v1) et la deuxième version (v2) sont transmises à un serveur central via une interface de communication du dispositif (10), le programme d'évaluation et l'étape de comparaison de la première version (v1) et de la troisième version (v3) étant exécutés sur le serveur central, un résultat de comparaison étant reçu du serveur central via l'interface de communication, le résultat de comparaison indiquant si une équivalence de la valeur de paramètre de configuration réglée entre la première version (v1) et la troisième version (v3) a été établie, et
le signal d'erreur est généré en fonction du résultat de comparaison reçu.

10. Procédé selon la revendication 8 ou 9,
dans lequel le programme d'évaluation est un programme informatique pour la reconnaissance automatique de texte.

11. Procédé selon l'une des revendications 7 à 10,
dans lequel, lorsqu'aucun signal d'erreur n'est généré, au moins un élément d'entrée (24, 24') de l'interface utilisateur (14) est activé pour permettre l'entrée d'un résultat de vérification par un opérateur du dispositif (10), le résultat de vérification étant déterminé du côté opérateur par une vérification visuelle de la valeur de paramètre de configuration réglée sur la base d'au moins une version (v1', v2'), affichée sur le moyen d'affichage (16), de la valeur de paramètre de configuration réglée.

12. Dispositif pouvant être configuré électroniquement par une valeur de paramètre de configuration réglée sur le dispositif,
dans lequel le dispositif (10) comprend une interface utilisateur (14) ayant un moyen d'affichage (16) et un moyen de commande (18),
l'interface utilisateur (14) est réalisée pour afficher une valeur de paramètre de configuration réglée en utilisant un navigateur (20) pour afficher des données sur le moyen d'affichage (16), et
le moyen de commande (18) est réalisé pour mettre en œuvre le procédé selon l'une des revendications précédentes.

13. Dispositif selon la revendication 12,
dans lequel le dispositif (10) comprend au moins un capteur (12) pour la surveillance d'une zone à surveiller, la valeur de paramètre de configuration réglée représentant un paramètre pour la définition de la zone à surveiller.
